# EUROPEAN PATENT SPECIFICATION

(11) **EP 0 535 105 B1**
(45) Date of publication and mention of the grant of the patent: **22.06.1994**
(21) Application number: 91911927.1
(22) Date of filing: 17.06.1991
(51) Int. Cl.: H02K 7/06, F16F 15/00, H02K 49/00, B60G 13/14

(54) **ELECTROMECHANICAL TRANSDUCER**
ELEKTROMECHANISCHER WANDLER
TRANSDUCTEUR ELECTROMECANIQUE

(30) Priority: 19.06.1990 NL 9001394
(43) Date of publication of application: 07.04.1993
(73) Proprietor: Otto Bock Orthopädische Industrie Besitz- und Verwaltungs-Kommanditgesellschaft, 37115 Duderstadt (DE)
(72) Inventor: VAN DE VEEN, Paul, Gerard, NL-7514 EC Enschede (NL)
(74) Representative: Gramm, Werner, Prof., Dipl.-Ing.
(86) International application number: PCT/NL91/00099
(87) International publication number: WO 91/20118

(56) References cited:
- DE-A- 2 336 078
- DE-A- 3 522 221
- GB-A- 1 282 568
- US-A- 2 783 643
- US-A- 3 557 387
- US-A- 3 559 027

## Description

The invention relates to an electromechanical transducer that can operate as a damper, comprising:
two elements movable in relation to one another, which can perform a translation relative to one another;
transducer means with two mechanical connections and two electrical out put feed lines said two mechanical connections being coupled to the two respective movable elements, said transducer means being of the rotating type;
transmission means comprising screw means for converting a linear relative movement of said movable elements into a rotating relative movement of said mechanical connections or vice versa,
a chargeable battery connected with said feed lines such that it can store the electrical energy supplied by the transducer means.

Such a transducer is known from US-A-3 559 027. The prior art electromechanical transducer can operate as a damper and is designed such that a linear movement is converted into a rotary movement of generator means connected with a battery for charging same.

It is a purpose of the invention to provide a transducer of the type mentioned, the resolution and the accuracy of which are improved.

The invention further has for its object to embody a transducer such that it is universally applicable and allows adjustment to the most diverse requirements and conditions of use without the necessity of adjustment in the transducer itself for this purpose, this being done via a control system.

The invention has for its further object to embody a transducer such that it has the same external shape as a known device which has the same functional operation, for example a known damper on a basis of liquid or gas.

These and other objectives to be stated hereinafter are generally realized according to the invention with a transducer of the type described, which is characterized by a central control unit, in particular a computer, having control terminals coupled to the feed lines from the transducer means and connected with said battery for power supply; and
measuring means for measuring the relative mechanical situation of said movable elements, such as position, speed or acceleration, and for generating signals representative of this mechanical situation, which signals are supplied to said control terminals of the control unit.

It should be noted that US-A-3 557 387 relates to an externally powered joint prosthesis. The basic idea of the invention is different from this prior art reference. According to the invention use is made of a transducer that can convert mechanical energy into electrical energy, which electrical energy can under strict electrical control be dissipated in a an electrical load. This influences to an essential degree the damping characteristics. Furthermore, according to the invention measuring means are present forming the basis of the mechanical adjustability of the transducer. Such measuring means are lacking in this prior art device.

Generally, the invention is residing in its basic and general form in the combination of two features. The first feature includes a micro processor or other suitable central control unit controlling the operation of the transducer and being connected with the chargeable battery for power supply. Thus, the transducer itself is able to generate the power for its own operation under control of said central control unit. The second feature is residing in the presence of the measuring means which are essential for the correct program-control performed by the central control unit.

The transducer means can in principle be of any suitable type. According to the invention however preference is given to an embodiment, in which the transducer means comprise a brushless motor.

The invention is based on the insight that the electromechanical transducer can convert mechanical energy into electrical energy and that the dissipation of kinetic energy exerts a damping action on the movable elements.

A very reliable and almost frictionless transmission is obtained in an embodiment wherein the transmission means comprise a ball circulation spindle

The use of a central control unit also offers the possibility of external control. For this purpose the transducer according to the invention has the feature that the central control unit is provided with control terminals for receiving external control signals. The external control signals may come from temperature sensors, dynamometers and the like. For example in rehabilitation technology a transducer according to the invention operating as damper device can be embodied such that the control terminals of the control unit are equipped to receive and process muscle signals. Diverse attempts have been made in this field to design dampers which, using simple means, allow adaptation to predetermined requirements and to varying operating conditions. It has been found from these attempts that the following problems, among others, occur in the design of such dampers.

The known controls operate slowly, which makes it particularly difficult to react quickly to changing situations during walking. The said attempts have resulted in programs to anticipate the mechanical changes during walking. The exceptionally rapid control possibilities of the transducer according to the invention solve these problems to a significant extent.

In a particular embodiment the transducer of the invention has the feature that the measuring means comprise rotation measuring means, for example a tacho generator or Hall generator, connected with the mechanical connections. It is noted here that in principle also other types of measuring means may be considered suitable, such as electrical or optical pulsators.

As already briefly discussed, the transducer can generate energy during the mutual movement of the movable elements. This energy can be dissipated in for example a resistive load, but according to the invention is also fed to the chargeable battery connected to the electrical terminals of the transducer, such that the battery can store the electrical energy generated by the transducer.

Another use for the energy stored in the accumulator is obtained with a variant wherein the accumulator is connected for feeding, under the control of the central control unit, electrical energy to the transducer in a direction opposed to the direction wherein the transducer generates energy during relative movement of the movable elements. During use as damping device a negative damping can be obtained herewith by reverse actuation of the transducer, which in this case will function temporarily as motor.

Finally, the transducer according to the invention can display the feature that the transducer has substantially the same external form as a known damping device.

The invention will now be elucidated with reference to the annexed figure. This figure shows an arbitrary embodiment of an adjustable damping device embodying the invention in partially broken way prospective view.

The damping device 1 according to the invention comprises a cylindrical housing 2 with an end wall 3 to which mounting means can be connected. These are not drawn here. The device 1 further comprises a shaft 4, whereof the free end protruding outside the device 1 can be provided with mounting means likewise not drawn here.

The shaft 4 is placed co-axially relative to the housing 2 and movable relative thereto in axial direction. For this purpose the shaft 4 takes a hollow form and is slidable over a second shaft 5 with a rectangular cross section, whereby the shaft 4 is blocked against rotation. The shaft 5 is mounted on a wall 6 which is rigidly coupled to the housing 2.

The shaft 4 has an external screw thread 7 which forms a ball circulation bearing together with a bearing block 8 and steel balls 9. Such a bearing is per se known. When the shaft 4 moves in axial direction relative to the housing 2, a movement of balls 9 takes place via a channel 10 in the bearing block 8 which, due to the rotational locking of the shaft 4, has the result that the bearing block 8 is set into rotation. This rotation is, given the fixed pitch of the screw thread 7, directly Proportional to the linear movement of the shaft 4.

Coupled to the bearing block 8 is a bearing ring 11 which as ball bearing with balls 12 co-acts with a second bearing ring 13 which is in turn fixedly coupled in the housing 2.

Coupled to the bearing block 8 is a tube 14 which is rotatably mounted on its end facing the wall 6 by means of a ball bearing 15. A magnet unit 16 is arranged on the outside of the tube 14. It will be apparent after the above explanation that the magnet unit 16 will undergo a rotation through axial displacement of the shaft 4, this being related to the position of the housina 2.

Accommodated between the outer surface of the cylindrical magnet unit 16 and the inner surface of the housing 2 is a stator winding 17. In per se known manner a voltage can be induced in the stator winding by rotation of the magnet unit 16. This voltage can be fed via lines 18, 19 to an electronic unit 20 which is arranged in the space enclosed by the end wall 3, the wall 6 and the housing 2.

The electronic unit 20 comprises an electric load for the stator winding 17 and a central control unit or CPU, which can be programmed in advance. The central control unit can also receive external control signals via an input cable 21.

Also situated in the said space wherein the electronic unit 20 is arranged is a rechargeable battery 22 which can serve on the one hand as electric load for the stator winding 17 and on the other for supplying the electronic unit 20. The energy stored in the battery 22 can be used in some conditions to supply current via the electronic unit 20 to the stator winding 17, whereby the damping device 1 temporarily obtains the function of motor, or a member with negative damping which can be desirable in certain conditions for controlling complex movements.

The functions briefly described above can all take place under program control. A program can be entered in advance into the electronic unit 20 which for this purpose can for instance comprise a microprocessor. An external computer can also be used which can communicate via the input cable 21 with the electronic unit 20. It will be apparent that in that case the cable 21 must be able to transport information in two directions.

For optimal control of particular movements the relative axial position of the shaft 4 relative to the housing 2 usually has to be known. The damping device 1 comprises thereto a Hall generator which is designated schematically and comprises a rotor ring 23, which is fixed with its inside to the bearing block 8 and a fastening ring 24 arranged on the tube 14, in addition to a Hall ring 25 which via a signal line 26 can generate to the electronic unit 20 a signal representative of the rotation position of the rotor ring 24 relative to the housing 2.

It is noted that many variants are possible within the scope of the invention. The ball circulation construction is chosen to obtain a high transmission accuracy and little friction. The described electromechanical transducer can also be implemented in a completely different manner. The construction of the stator and the rotor can for example be reversed or combined forms can be used.

Electrodynamic transducers of the present type exist in different embodiments. Three basic types can be distinguished:
1. A rotor with permanent magnet and a stator with electrical winding.
2. A rotor with electrical winding and a stator with electrical winding.
3. A rotor with electrical winding and a stator with permanent magnet.

In transducers according to types 2 and 3 a commutator has to be used for alternating connection of different stator windings to the external electrical circuit. Since commutators by their nature introduce friction and wear they are considered less suitable for use within the scope of the invention. Type 1 does not need a commutator and therefore seems in the first instance the most suitable for application within the framework of the invention. In principle however the absence of a commutator would eliminate the possibility of also having the device operate as motor, and thus of applying negative damping. In order to nevertheless realize this possibility without a commutator the electronic unit 20 must be embodied such that the commutation function is assumed by the unit. In the embodiment drawn this is realized by the Hall generator 23, 25. In this embodiment therefore the advantage of a very low rotational friction is combined with the possibility of negative damping.

Attention is finally drawn to the fact that the invention is not limited to linear movements but also relates to devices with two displaceable elements which can perform a different movement relative to one another, for example a rotating movement. In this respect it will be apparent without further elucidation that for this purpose the use of the ball circulation construction could be dispensed with and the rotating movements of the housing 2 relative to for instance the first bearing ring 11 can be used. The ball circulation spindle serves in any case only for converting a linear movement into a rotating movement and the vice versa.

As examples for application of the transducer according to the invention can be mentioned: a motor, a damper, for example for use in orthopaedic technology and rehabilitation technology, a temperature-independent door check, a shock absorber, an actuator in robotics technology. It will be apparent that these. represent only several random examples of application.

The following are some of the advantages of the construction according to the invention.

The external form of the transducer according to the invention can in general be simply adapted to user requirements. The designer has for instance the freedom to make the external form almost identical to existing passive dampers. This is of course beneficial to easy exchangeability.

The transducer according to the invention lends itself to the use of the electrical energy generated during mechanical excitation for supplying a control system that can for example be incorporated in the damper.

Through coupling to a control system, for example on the basis of a microprocessor, all mechanical functions can be very simply monitored and continuously readjusted during complicated operating conditions which can occur for example during use as damper in orthopaedics.

In this respect also it is recommended to use measuring means for measuring the relative mechanical position of the movable elements. A Hall generator is for example a very suitable assist means for this purpose which allows of integration into the transducer while occupying very little space.

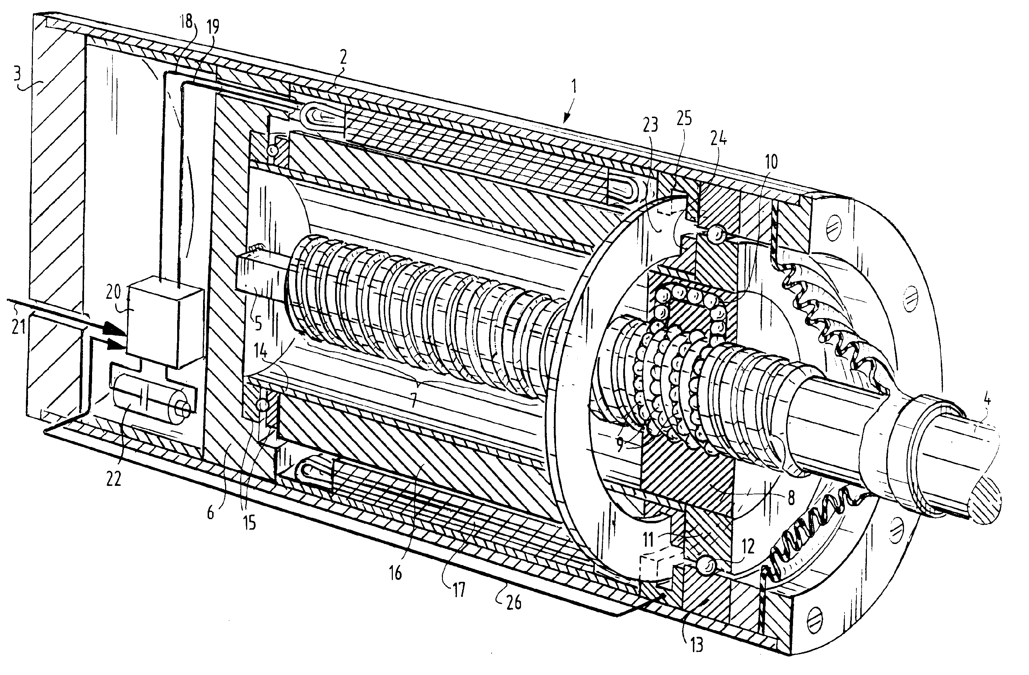

## Claims

1. Electromechanical transducer (1) that can operate as a damper, comprising:
two elements (2, 4) movable in relation to one another, which can perform a translation relative to one another;
transducer means (16, 17) with two mechanical connections (11, 13) and two electrical out put feed lines (18, 19) said two mechanical connections (11, 13) being coupled to the two respective movable elements (2, 4), said transducer means (16, 17) being of the rotating type;
transmission means (7, 8, 19) comprising screw means for converting a linear relative movement of said movable elements (2, 4) into a rotating relative movement of said mechanical connections (11, 13) or vice versa,
a chargeable battery (22) connected with said feed lines (18, 19) such that it can store the electrical energy supplied by the transducer means (16, 17)
characterized by
a central control unit (20), in particular a computer, having control terminals coupled to the feed lines (18, 19) from the transducer means (16, 17) and connected with said battery (22) for power supply; and
measuring means (23, 25) for measuring the relative mechanical situation of said movable elements, such as position, speed or acceleration, and for generating signals representative of this mechanical situation, which signals are supplied (26) to said control terminals of the control unit (20).

2. Transducer as claimed in claim 1, characterized in that the transducer means (16, 17) comprise a brushless motor.

3. Transducer as claimed in claim 1, characterized in that the transmission means (7, 8, 19) comprise a ball circulation spindle.

4. Transducer as claimed in claim 1, characterized in that the central control unit (20) is provided with control terminals (21) for receiving external control signals.

5. Transducer as claimed in claim 1, characterized in that the measuring means (23, 25) comprise rotation measuring means, for example a tacho generator or Hall generator, connected with the mechanical connections (11, 13)

6. Transducer as claimed in claim 1, characterized in that the battery 22 is connected for supplying electrical energy, under the control of the central control unit (20), to the transducer means (16, 17) in a direction opposed to the direction wherein the transducer means (16, 17) generate energy during relative movement of the movable elements (2,4).

7. Transducer as claimed in claim 1, characterized in that the transducer (1) substantially has the same external form as a known damping device.

## Patentansprüche

1. Elektromechanischer, als Dämpfer betreibbarer Wandler (1), mit
zwei relativ zueinander bewegbaren Elementen (2,4), die relativ zueinander eine Translation ausführen können; einem Wandlerteil (16,17) des Verdrehtyps mit zwei mechanischen, mit den entsprechenden beweglichen Elementen (2,4) gekuppelten Verbindungen (11,13) und mit zwei elektrischen Ausgangszuführungen (18,19);
Übertragungsmitteln (7,8,9) mit einer Schraube zur Umwandlung einer linearen Relativbewegung der genannten bewegbaren Elemente (2,4) in eine relative Drehbewegung der genannten mechanischen Verbindungen (11,13) oder vice versa; und mit
einer aufladbaren Batterie (22), die mit den genannten Zuführungen (18,19) so verbunden ist, daß sie die vom Wandlerteil (16,17) gelieferte elektrische Energie speichern kann;
**gekennzeichnet durch**
- eine zentrale Steuereinheit (20), insbesondere einen Computer, mit Steueranschlüssen, die an die Zuführungen (18,19) vom Wandlerteil (16,17) angeschlossen und mit der genannten Batterie (22) zur Energiezufuhr verbunden sind; und durch
- eine Meßeinrichtung (23,25) zur Feststellung der relativen mechanischen Situation der genannten beweglichen Elemente, zum Beispiel der Position, Geschwindigkeit oder Beschleunigung, und zur Erzeugung von dieser mechanischen Situation entsprechenden Signalen, die an die genannten Steueranschlüsse der Steuereinheit (20) übermittelt werden.

2. Wandler nach Anspruch 1, **dadurch gekennzeichnet,** daß das Wandlerteil (16,17) einen bürstenlosen Mötor aufweist.

3. Wandler nach Anspruch 1, **dadurch gekennzeichnet,** daß die Übertragungsmittel (7,8,9) eine Kugeldrehspindel aufweisen.

4. Wandler nach Anspruch 1, **dadurch gekennzeichnet,** daß die zentrale Steuereinheit (20) mit Steueranschlüssen (21) zum Empfang externer Steuersignale versehen ist.

5. Wandler nach Anspruch 1, **dadurch gekennzeichnet,** daß die Meßeinrichtung (23,25) eine mit den mechanischen Verbindungen (11,13) gekuppelte Drehmeßeinrichtung aufweist, zum Beispiel einen Tacho- oder Hallgenerator.

6. Wandler nach Anspruch 1, **dadurch gekennzeichnet,** daß die Batterie (22) für die elektrische Energiezufuhr unter der Steuerung der zentralen Steuereinheit (20) an das Wandlerteil (16,17) angeschlossen ist in einer Richtung, die derjenigen entgegengerichtet ist, in der der Wandlerteil (16,17) während der Relativbewegung der beweglichen Elemente (2,4) Energie erzeugt.

7. Wandler nach Anspruch 1, **gekennzeichnet durch** eine äußere Form, die im wesentlichen der einer bekannten Dämpfereinrichtung entspricht.

## Revendications

1. Convertisseur électromécanique (1) qui peut fonctionner comme un amortisseur, comportant :
deux éléments (2, 4) pouvant être déplacés l'un par rapport à l'autre et pouvant effectuer une translation relative l'un par rapport à l'autre;
des moyens de convertisseur (16, 17) comportant deux liaisons mécaniques (11, 13) et deux lignes d'alimentation électrique de sortie (18, 19), lesdites deux liaisons mécaniques (11, 13) étant accouplées aux deux éléments mobiles respectifs (2, 4), lesdits moyens de convertisseur (16, 17) étant du type rotatif;
des moyens de transmission (7, 8, 19) comportant des moyens à vis en vue de convertir un déplacement relatif linéaire desdits éléments mobiles (2, 4) en un déplacement relatif en rotation desdites liaisons mécaniques (11, 13) ou inversement;
une batterie rechargeable (22) reliée auxdites lignes d'alimentation (18, 19) de manière à pouvoir emmagasiner l'énergie électrique fournie par les moyens de convertisseur (16, 17),
caractérisé par
une unité centrale de contrôle (20), en particulier un ordinateur, présentant des bornes de contrôle couplées aux lignes d'alimentation (18, 19) provenant du moyen de convertisseur (16, 17) et reliées à ladite batterie (22) en vue d'une alimentation en énergie, et par
des moyens de mesure (23, 25) en vue de mesurer la situation mécanique relative desdits éléments mobiles, comme la position, la vitesse ou l'accélération, et en vue de créer des signaux représentatifs de cette situation mécanique, ces signaux étant fournis (26) auxdites bornes de contrôle de l'unité de contrôle (20).

2. Convertisseur selon la revendication 1, caractérisé en ce que le moyen de convertisseur (16, 17) comporte un moteur sans balais.

3. Convertisseur selon la revendication 1, caractérisé en ce que les moyens de transmission (7, 8, 19) comportent une tige à circulation de billes.

4. Convertisseur selon la revendication 1, caractérisé en ce que l'unité centrale de contrôle (20) est dotée de bornes de contrôle (21) en vue de recevoir des signaux extérieurs de contrôle.

5. Convertisseur selon la revendication 1, caractérisé en ce que les moyens de mesure (23, 25) comportent des moyens de mesure de rotation, par exemple un tachymètre ou un générateur Hall, reliés aux liaisons mécaniques (11, 13).

6. Convertisseur selon la revendication 1, caractérisé en ce que la batterie (22) est branchée pour fournir de l'énergie électrique au moyen de convertisseur (16, 17) sous le contrôle de l'unité centrale de contrôle (20), dans un sens opposé au sens dans lequel le moyen de convertisseur (16, 17) produit de l'énergie pendant le déplacement relatif des éléments mobiles (2, 4).

7. Convertisseur selon la revendication 1, caractérisé en ce que le convertisseur (1) présente essentiellement la même forme extérieure qu'un dispositif amortisseur connu.
